# EUROPEAN PATENT APPLICATION

(11) **EP 1 662 762 A2**
(43) Date of publication of application: **31.05.2006**
(21) Application number: 05090325.1
(22) Date of filing: 24.11.2005
(51) Int. Cl.: H04M 1/725

(54) **Mobile terminal, content setting method therefor, content setting system and computer program for a mobile terminal**

(30) Priority: 26.11.2004 JP 2004342637
(71) Applicant: NEC CORPORATION, Minato-ku, Tokyo 108-01 (JP)
(72) Inventor: Hayashi, Keiichi, Minato-ku Tokyo 108-01 (JP)
(74) Representative: Wenzel & Kalkoff

(57) **Abstract**

Disclosed is a mobile terminal including: a panel detachably attached to a body of the mobile terminal; a user interface provided to a user upon execution of a function of the mobile terminal; a panel identifying unit for identifying the type of panel attached to the mobile terminal; and a controller for obtaining content corresponding to the type of panel identified by the panel identifying unit from an external apparatus if the content does not exist in the mobile terminal, and setting the obtained content for the user interface in a usable state.

## Description

### BACKGROUND OF THE INVENTION

### 1. Field of the Invention

The present invention relates to a mobile terminal, a content setting method therefor, a content setting system, and a computer program for a mobile terminal. In particular, the present invention relates to a mobile terminal, a content setting method therefor, a content setting system, and a computer program for a mobile terminal, which improve usability of a mobile terminal.

### 2. Description of the Related Art

In recent years, mobilephones that constitute the majority of mobile terminals not only have a conventional voice communication function but also various functions including a function of sending/receiving electronic mail (hereinafter, referred to simply as "e-mail"), a Web browsing function, a schedule management function, and a video phone function.

However, even with those highly functional mobile phones, users thereof still need to use the conventional operation devices, such as a numeric keypad and a pointing device, to perform various settings. In general, it is hard to increase the number of keys (buttons) included in the operation devices of mobile phones or to diversify their operation manners due to limitations on the total mounting area of the operation devices. Thus, an increase in the number of various functions necessitates an increase in the number of options and levels of a hierarchical menu for access to those functions, which leads to a more complicated operation system. As a result, recent-model mobile phones tend to require more complicated operation from users thereof.

Japanese Laid-Open Patent Application No.JP2004-221860A proposes a technique related to a mobile terminal having a detachable panel attached to a device main body thereof. The technique allows a desired function to be automatically set in a user's own mobile terminal according to a type of panel attached thereto. According to the technique of JP2004-221860A, a user may simply change the attached panel to reliably set a desired function selected from a function group (operation modes including a silent mode and a ringer melody mode) prestored in a mobile terminal. For example, when a "panel #1" is attached to a mobile phone, its operation mode is set to a "silent mode 1" with a call inhibited and a ringtone disabled. Similarly, when a "panel #3" is attached to a mobile phone, its ringtone is set to a "ringer melody #3" prestored in a memory.

It should be noted that tastes and preferences of mobile terminal users vary widely. This implies users' demands for modification of content to suit their tastes and preferences even with respect to a user interface (man-machine interface) used for executing the various additional functions. To be specific, there are demands that content including tones, sounds, and display screens, which is provided as part of a user interface upon execution of a given function, be modified to suit the tastes and preferences of users.

Consideration will now be given to a case where such demands varying widely from user to user are met with a structure of the mobile terminal according to JP2004-221860A. It is impossible here to set content (for example, a ringer melody) that is not stored in an internal memory of the mobile terminal. Therefore, many content items such as sounds to be outputted and display screens need to be prestored in the internal memory. In this case, however, as numbers of types and items of content to be included in the memory increase, the users' operation for selection of functions becomes more complicated. Further, in terms of effective use of the internal memory, it is unpreferable to the structure in which many content items are prestored in the internal memory having a limited storage capacity.

In recent years, users further demand that even with the same additional function (operation mode) to be executed on a mobile terminal, content to be referred to at a time of execution of the function be updated in a relatively short term. For example, there are demands that the content of a ringer melody or a ringer song be updated according to a weekly music chart. Here, the term "ringer melody" represents a tune with only melody without vocals to be outputted as a ringtone. In contrast, the term "ringer song" represents a tune containing a singer's voice to be outputted as a ringtone.

In addition, services providing various content items for additional functions including ringer melodies and ringer songs continue to grow against the backdrop of the users' demands. For example, proposed in US Patent Application Publication No. US2003/0027604A1 is a technique in which several types of tone information are obtained in advance for each occasion of use of a mobile terminal (e.g., incoming call, alarm going off, key operation confirmation, or execution of a game), and a sound is outputted based on the optimal tone according to a situation when a user operates the mobile terminal.

General operations to be performed by a user who intends to use the above-mentioned service include: downloading desired content from a predetermined server on the Web to a mobile terminal; and registering the downloaded content in a predetermined area of the internal memory of the mobile terminal. However, it is extremely troublesome for the user to frequently carry out the series of operations using conventional operation devices. Meanwhile, the technique of JP2004-221860A allows a user to set a desired function by attaching a predetermined panel to a mobile terminal. However, the user cannot appropriately update content used for the same function that has been set.

Accordingly, neither the conventional operation devices nor the mobile terminal according to JP2004-221860A satisfies the diverse demands of users that even the content such as sounds to be outputted and display screens be easily set, changed, or updated according to his/her tastes or preferences.

### SUMMARY OF THE INVENTION

The present invention has been made in view of the above-mentioned problems.

An exemplary feature of the present invention is to provide a mobile terminal, a content setting method therefor, a content setting system, and a computer program for a mobile terminal,
in which a simple operation allows a user to obtain content to be used for a user interface of a mobile terminal and to reliably set or change the obtained content.

The present invention provides a mobile terminal including: a panel detachably attached to a body of the mobile terminal; a user interface provided to a user upon execution of a function of the mobile terminal; a panel identifying unit for identifying the type of panel attached to the mobile terminal; and a controller for obtaining content corresponding to the type of panel identified by the panel identifying unit from an external apparatus if the content does not exist in the mobile terminal, and setting the obtained content for the user interface in a usable state.

Further, the present invention provides a content setting method for a mobile terminal, including: an identifying step of, when a panel detachably attached to a body of the mobile terminal is attached; identifying the type of attached panel; and a content obtaining step of obtaining content corresponding to the type of the panel identified in the identifying step from an external apparatus; and a setting step of setting the obtained content for a user interface, which is provided to the user upon execution of a function of the mobile terminal, in a usable state.

Further, the present invention provides a content setting system, in which content to be used for a user interface, which is provided to a user upon execution of a function of a mobile terminal, is set in the mobile terminal in which a panel is detachably attached to a body of the mobile terminal, the content setting system including: the mobile terminal having: a panel identifying unit for identifying the type of panel attached to the mobile terminal; and a controller for requesting the content corresponding to the attached panel from an external apparatus based on information indicating the type of the panel identified by the panel identifying unit, and when the content is obtained, setting the obtained content for the user interface in a usable state; and the external apparatus for, when information indicating the type of the attached panel is obtained from the mobile terminal, extracting a data set corresponding to the information from a database storing a plurality of content data sets, and providing the extracted data set to the mobile terminal.

Further, the present invention provides a computer program for controlling an operation of a mobile terminal in which a panel is detachably attached to a body of the mobile terminal, the computer program causing a computer to implement: an identifying function of identifying the type of panel attached to the mobile terminal; a content obtaining function of obtaining content corresponding to the type of the panel identified in the identifying function from an external apparatus if the content does not exist in the mobile terminal; and a control function of setting the obtained content for the user interface, which is provided to the user by the mobile terminal upon execution of a function, in a usable state.

According to the present invention, a user can obtain and set content, which is to be used for a user interface provided to the user by amobile terminal upon execution of a given function, with such a simple operation that the user merely attaches a desired panel to the mobile terminal. Consequently, the user can set or change a content item used for the user interface to a desired one with only a simple operation.

### BRIEF DESCRIPTION OF THE DRAWINGS

The above and other exemplary aspects, features and advantages of the present invention will become more apparent from the following detailed description when taken in conjunction with the accompanying drawings wherein:
FIG. 1A is an external view of a mobile phone according to an exemplary embodiment of the present invention;
FIG. 1B is an external view showing a rear surface of a panel detachably attachable to the mobile phone according to this embodiment;
FIG. 2 is a block diagram showing a hardware configuration of the mobile phone according to this embodiment;
FIG. 3 is a conceptual diagram showing an example of a panel ID table;
FIG. 4 is a block diagram showing a software configuration of the mobile phone according to this embodiment;
FIG. 5 is a flowchart showing a panel detecting/content setting processing for the mobile phone according to the this embodiment;
FIG. 6 is a flowchart showing details of a content setting processing included in the processing of FIG. 5;
FIG. 7 shows an example of a data structure of content groups stored in a content management server 105 according to this embodiment;
FIG. 8 illustrates a system configuration in a case where a mobile phone 101 according to this embodiment obtains content from the content management server 105;
FIG. 9 illustrates correspondences between panel types and content groups and data structures of the content groups;
FIG. 10A is an external view showing a rear surface of a panel according to another exemplary embodiment of the present invention;
FIG. 10B is a block diagram showing a configuration of a panel identifying unit according to the other exemplary embodiment;
FIG. 11A is an external view showing a rear surface of a panel according to still another exemplary embodiment of the present invention; and
FIG. 11B is a block diagram showing a configuration of a panel identifying unit according to the still other exemplary embodiment.

### DETAILED DESCRIPTION OF THE EXEMPLARY EMBODIMENTS

Exemplary embodiments of the present invention will now be described in detail in accordance with the accompanying drawings.

Hereinafter, detailed description will be made on exemplary embodiments in which the present invention is applied to a mobile phone that represents mobile terminals.

### <Hardware configuration>

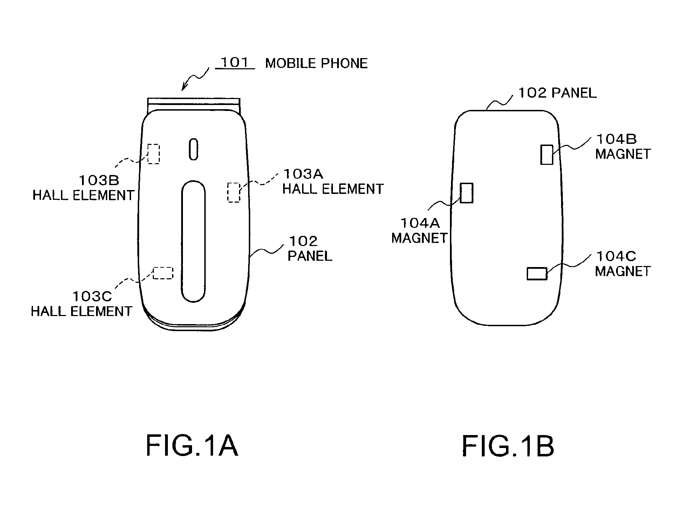

FIG. 1A is an external view of a mobile phone 101 according to an exemplary embodiment of the present invention. FIG. 1B is an external view showing a rear surface of a panel detachably attachable to the mobile phone 101.

The mobile phone 101 according to this embodiment is, for example, a folding mobile phone that can be folded as shown in FIG. 1A. The mobile phone 101 is composed of a mobile phone main body and a panel 102 that is attached to the outside of the mobile phone main body. The mobile phone main body may have, for example, a known structure including: a first casing on an upper side having a display device, an image pickup device, a speaker, an antenna, etc.; a second casing on a lower side having an operation device, a microphone, etc. ; and a hinge that couples the first casing and the second casing in a foldable manner. The main body of the mobile phone 101 has Hall elements 103A to 103C embedded as shown by broken lines in FIG. 1A. The Hall elements 103A to 103C are used for detecting whether a magnet is near or not to determine the type of attached panel 102.

In other words, in this embodiment, a plurality of panels 102 are prepared in advance, and a user can appropriately select a desired one to attach the selected panel 102 to the mobile phone main body. As shown in FIG. 1B, according to the needs, magnets 104A to 104C are embedded in a rear surface of the panel 102 in positions which correspond to the Hall elements 103A to 103C when the panel 102 is attached to the mobile phone main body, respectively.

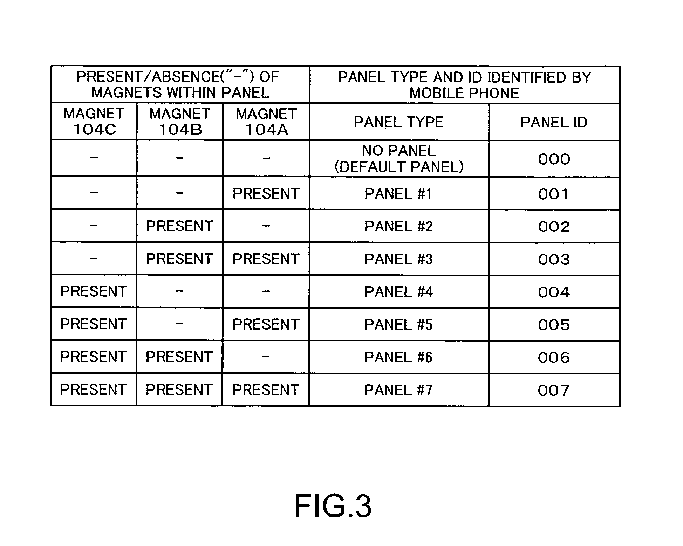

It should be noted that FIG. 3 will be used later to describe a relationship between types of panel 102 and the magnets. For structure or a mechanism in which the panel 102 is detachably attached to the main body of the mobile phone 101, it is possible to appropriately adopt a currently-known general structure or mechanism such as a slide type or a screwed type, so detailed description of the structure or mechanism will be omitted in this embodiment.

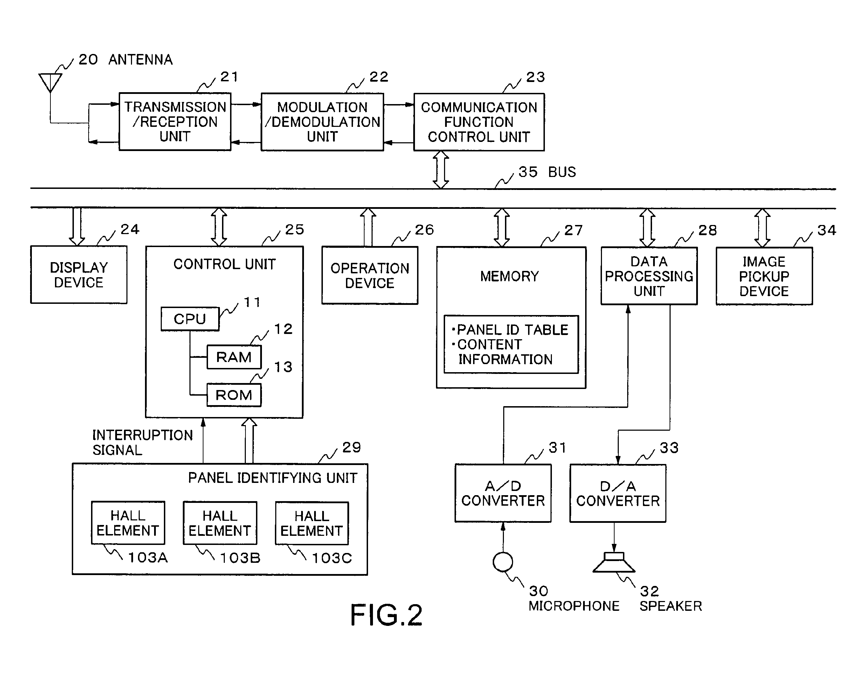

FIG. 2 is a block diagram showing a hardware configuration of the mobile phone 101 according to this embodiment. As shown in FIG. 2, the mobile phone 101 according to this embodiment includes an antenna 20, a transmission/reception unit (or circuit) 21, a modulation/demodulation unit (or circuit) 22, a communication function control unit (or circuit) 23, a display device 24, a control unit (or circuit) 25, an operation device 26, a memory 27, a data processing unit ('or circuit) 28, a panel identifying unit (or circuit) 29, a microphone 30, an analog/digital (A/D) converter 31, a speaker 32, a D/A converter 33, an image pickup device (camera) 34, and a bus 35.

The transmission/reception unit 21 performs radio communications with a network (public radio telecommunication network) via the antenna 20. The modulation/demodulation unit 22 modulates a signal to be transmitted and demodulates a received radio signal. The communication function control unit 23 communicates with the control unit 25 via the bus 35, and controls the transmission/reception unit 21 and the modulation/demodulation unit 22 according to instructions from the control unit 25.

The display device (display) 24 displays images and characters according to instructions from the control unit 25 while the mobile phone 101 executes various functions. The operation device 26 includes operation keys (switches) such as a numeric keypad and a pointing device, which are used by a user for various settings and inputs.

The memory 27 is a non-volatile storage device such as a flash memory and holds e-mail messages, user data including an address book, and the like. The memory 27 further holds content information and a panel ID table (described in detail later with reference to FIG. 3).

The data processing unit 28 performs various processings in association with voice communications according to instructions from the control unit 25. The A/D converter 31 converts an analog sound signal outputted from the microphone 30 into digital sound data, and inputs the converted sound data to the data processing unit 28. In contrast, the D/A converter 33 converts the digital sound data outputted from the data processing unit 28 into an analog sound signal to output the converted sound through the speaker 32.

The image pickup device 34 is, for example, a charge-coupled device (CCD) , and can be used for picking up images around a user or the user himself/herself for video communications. The panel identifying unit 29 includes the Hall elements 103A to 103C to notify the control unit 25 of the detection result obtained by the Hall elements.

The control unit 25 includes a central processing unit (CPU) 11, a random access memory (RAM) 12, a read only memory (ROM) 13, and other hardware (not shown). In the control unit 25, the CPU 11 uses the RAM 12 as a work area to execute software programs read from the ROM 13, the memory 27, or the like, thereby administrating operations of units of the mobile phone 101. To be specific, the CPU 11 controls the operations of units such as the communication function control unit 23 and the data processing unit 28 to realize voice communications (including the video phone function) using the speaker 32 and the microphone 30 and data communications such as the e-mail sending/receiving function and a server connection function. The CPU 11 further controls ringing/vibrating actions for an incoming call and incoming e-mail and a user interface such as the screen display on the display device 24.

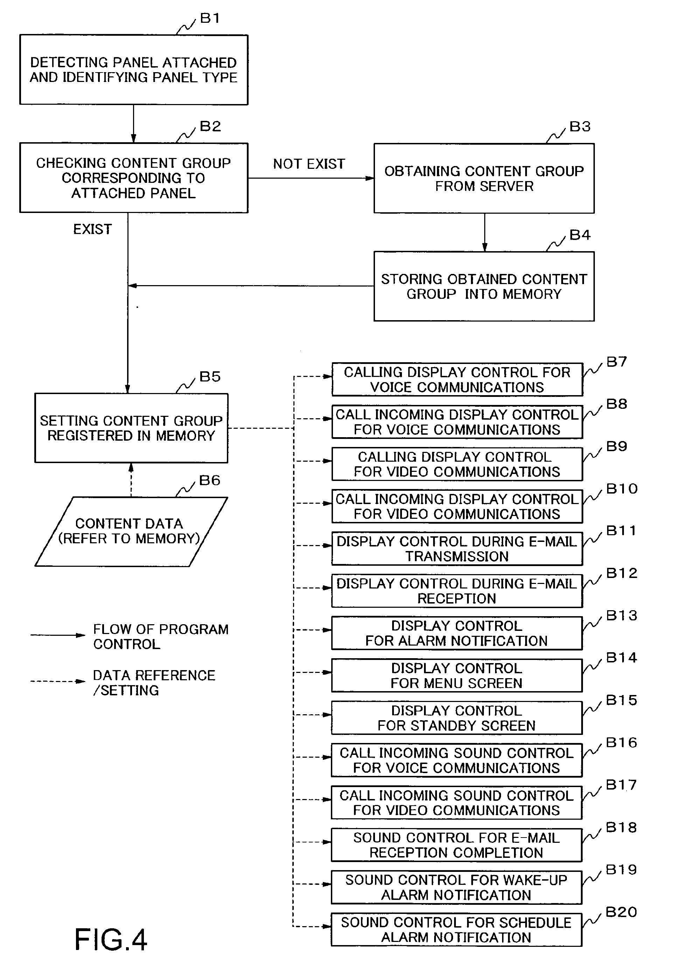

In the present invention, the panel identifying unit 29 corresponds to panel identifying means, and the control unit 25 corresponds to a controller or control means for executing operations described later with reference to FIGs. 4 to 6 by software.

It should be noted that currently-known general techniques can be adopted for the operations per se, such as a data transmitting/receiving processing and a sound processing, which are executed with respect to an external apparatus/device with the above-mentioned device structure and configuration of the mobile phone 101. Thus, detailed description of the techniques will be omitted in this embodiment.

Next, FIG. 3 will be used to describe a method of identifying types of panel 102, the method being performed by the above-mentioned Hall elements 103A to 103C on a mobile phone main body side and the magnets 104A to 104C on a panel 102 side.

FIG. 3 is a conceptual diagram showing the panel ID table. The panel ID table shown in FIG. 3 is prestored in the non-volatile memory 27. In this embodiment, the CPU 11 refers to the panel ID table based on the detection results obtained by the Hall elements 103A to 103C of the panel identifying unit 29 to determine the type of panel 102 attached to the main body.

To be specific, FIG. 3 shows that, for example, eight types of attachment manners for panels 102 are registered in the panel ID table. The eight types of attachment manners represent a default state (state without a panel, or state in which a default panel is attached) and respective states in which panels #1 to #7 are attached, and are assigned with panel IDs "000" to "007" as identification information. The panels #1 to #7 differ from one another in terms of attachment patterns of the magnets 104A to 104C as shown in the example of FIG. 3.

It should be noted that types and number of panels 102 that can be detachably attached may appropriately be changed or adjusted depending upon number and positions of magnets (magnetic substances) to be attached and a number and positions of Hall elements provided to the mobile phone main body corresponding to the magnets.

The panel 102 may also be structured as a protective cover that is attached to a front surface of the display device 24 such as liquid crystal display equipment (that is, on a side of a user in use). Alternatively, the panel 102 may further be structured as a decoration panel for casings of the various mobile terminals described above. The panel 102 may be formed of, for example, a resin.

### <Software configuration>

Next, description will be made of functions of the mobile phone 101 having the above-mentioned hardware configuration, the functions each being implemented when the control unit 25 causes the CPU 11 to execute a given software program.

FIG. 4 is a block diagram showing a software configuration of the mobile phone 101 according to this embodiment. The block diagram shown in FIG. 4 represents a processing flow from identification of a type of panel 102 attached to the mobile phone 101 to setting (registration) of content according to the attached panel 102.

To be specific, the CPU 11 of the control unit 25 detects whether or not the panel 102 is attached to the main body of the mobile phone 101, and upon detection of the attachment, performs a processing of identifying the panel type (block B1).

The CPU 11 further performs a, processing of checking whether content information (hereinafter, referred to as a "content group") corresponding to the type of panel 102 whose attached state is detected in block B1 is stored in the memory 27 or not (block B2).

If it is judged in block B2 that the corresponding content group is not yet stored in the memory 27, the CPU 11 performs a processing of obtaining the content group from an external apparatus or device (a content management server 105 to be described later) (block B3). Then, the CPU 11 performs a processing of storing the content group obtained in block B3 into the memory 27 (block B4).

Next, the CPU 11 reads the content group whose existence is confirmed in block B2 or the content group registered in block B4 from the non-volatile memory 27 to the RAM 12 (block B6). The CPU 11 further performs a processing of setting (registering) the content group to be subjected to processing blocks B7 to B20 (block B5).

The processing blocks B7 to B20 compose a software module for providing a user with a user interface when the mobile phone 101 executes various functions. To be specific, the CPU 11 executes the processing blocks B7 to B20 in which content items are registered in the block B5 to display a screen on the display device 24 and output a sound through the speaker 32.

Hereinbelow, description will be made on outlines of the respective processing blocks B7 to B20. The processing blocks B7 to B15 relate to displaying of an image, while the processing blocks B16 to B20 relate to outputting of a sound.

The processing block B7 represents a processing of controlling a screen displayed on the display device 24 when a user makes a call during execution of a voice communication function. The processing block B8 represents a processing of controlling a screen displayed on the display device 24 when a call is received during execution of the voice communication function.

The processing block 89 represents a processing of controlling a screen displayed on the display device 24 when a user makes a call during execution of a video communication function. The processing block B10 represents a processing of controlling a screen displayed on the display device 24 when a call is received during execution of the video communication function.

The processing block B11 represents a processing of controlling a screen displayed on the display device 24 when a user sends e-mail during execution of an e-mail function. The processing block B12 represents a processing of controlling a screen displayed on the display device 24 when e-mail is received during execution of the e-mail function.

The processing block B13 represents a processing of controlling a screen displayed on the display device 24 to inform a user of a predetermined state by an alarm during execution of a schedule management function. The processing block B14 represents a processing of displaying on the display device 24 a menu screen through which a user can set various functions.

The processing block B15 represents a processing of controlling a screen displayed on the display device 24 on standby during execution of the voice communication function or the video communication function.

The processing block B16 represents a processing of outputting a sound through the speaker 32 when a call is received during execution of the voice communication function. The processing block B17 represents a processing of outputting a sound through the speaker 32 when a call is received during execution of the video communication function.

The processing block B18 represents a processing of outputting a sound through the speaker 32 when e-mail reception is complete during execution of the e-mail function. The processing block B19 represents a processing of outputting a sound through the speaker 32 to inform a user that a preset time (date) is reached during execution of a wake-up alarm (time informing alarm) notifying function. The processing block B20 represents a processing of outputting a sound through the speaker 32 to inform a user that a preset time for an event is reached during execution of a schedule alarm notifying function.

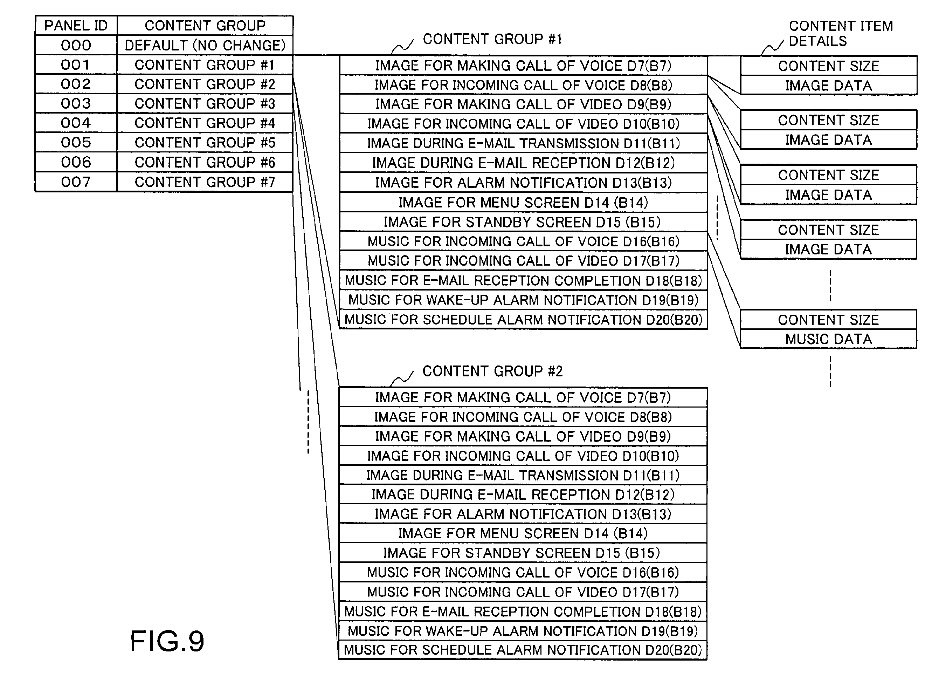

Next, FIG. 9 will be used to describe correspondences among the panel ID specified in the panel ID table of FIG. 3, the processing blocks B7 to B20, and the content groups stored in the memory 27.

FIG. 9 illustrates correspondences between panel types and content groups and data structures of the content groups. In this embodiment, as shown in FIG. 9, the memory 27 stores content groups corresponding to the respective eight panel IDs ("000" to "007") . The content groups (content groups 1 to 7, excluding one corresponding to ID information "000" that is set when the panel 102 is not attached) include image data and music (tune) data that are referred to upon execution of the processing blocks B7 to B20. Note that, in a data structure shown in the center column of FIG. 9, symbols D7 to D20 parenthesized in respective rows denote corresponding processing blocks B7 to B20 of FIG. 4, respectively.

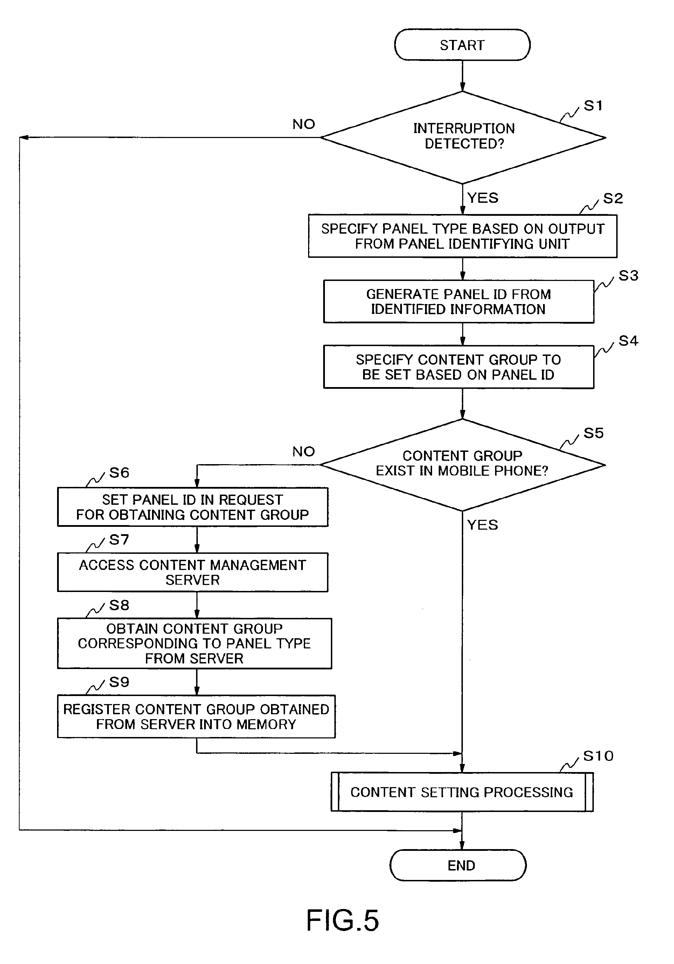

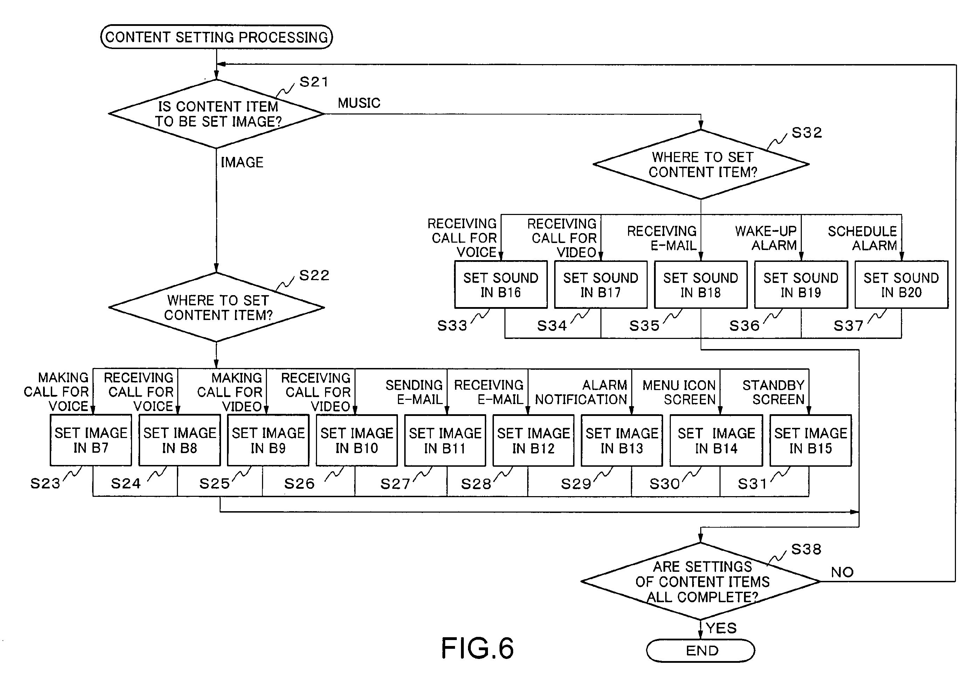

Next, FIGs. 5 and 6 will be used to describe further in detail processings implemented when the CPU 11 executes blocks B1 to B6.

FIG. 5 is a flowchart showing a panel detecting/content setting processing for the mobile phone 101 according to this embodiment. The flowchart represents a processing procedure for a software program executed by the CPU 11 within the control unit 25.

Steps S1 to S9 of FIG. 5 described below represent detailed processings of blocks B1 to B4 described above. Step S10 corresponds to blocks B5 and B6 described above.

First, a user determines whether or not to change content (a display screen and a sound to be outputted) for the user interface provided by the mobile phone 101 from a default (default state). The user may attach any one of the panels #1 to #7 described above to the main body of the mobile phone 101 as desired.

The panel identifying unit 29 detects presence/absence of the magnets 104A to 104C by using the Hall elements 103A to 103C. If at least one of the magnets is detected, the panel identifying unit 29 notifies the CPU 11 by an interruption signal. The interruption signal allows the CPU 11 to recognize that the panel 102 is attached (YES in step S1).

Then, the CPU 11 refers to the panel ID table of FIG. 3 based on the detection result of the Hall elements 103A to 103C obtained through the panel identifying unit 29. Accordingly, the CPU 11 specifies the panel type of the attached panel 102 (one of the panels #1 to #7) (step S2). Further, the CPU 11 reads one of the panel IDs "000" to "007" corresponding to the panel type specified in step S2 from the panel ID table (step S3) .

Then, the CPU 11 specifies one of content groups 1 to 7 which corresponds to the panel ID obtained in step S3 (step S4). The CPU 11 judges whether or not the content group specified in step S4 is already stored in a predetermined area in the memory 27 (step S5) . If it is judged that the content group is stored (judged to be "YES" in step S5) , the processing procedure for the CPU 11 advances to step S10 (content setting processing of FIG. 6).

Meanwhile, if it is judged that the content group is not yet stored (judged to be "NO" in step S5) , the CPU 11 generates request information for obtaining the content group from an external apparatus (step S6). The request information contains the panel ID obtained in step S3, a request command to obtain content group, and a uniform resource locator (URL) of the external apparatus (content management server 105) from which the content group can be obtained. The URL may be registered in advance in the panel 102 or the memory 27.

In the case of obtaining the URL from the panel 102, various currently-general techniques can be adopted. The techniques include a technique in which a bar code representing the URL is provided to the panel 102 in a sticker form, a printed form, or other such form, so the bar code is read by an optical sensor (not shown) provided to the mobile phone main body. The techniques also include a technique in which an IC chip storing the URL is provided to the panel 102, so the CPU 11 can read the content of the IC chip via terminals provided to the rear surface of the panel 102 and the mobile phone main body in step S6.

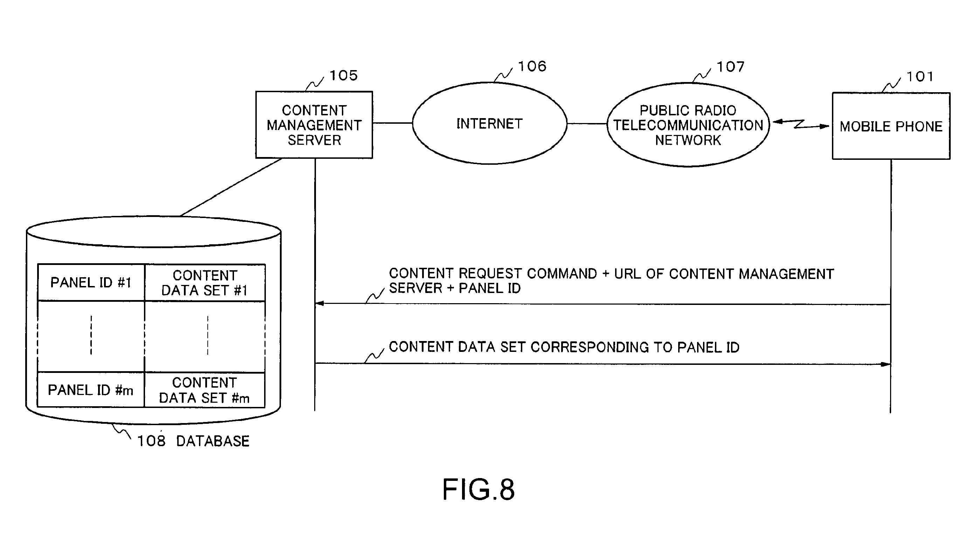

In this embodiment, the mobile phone 101 can access the content management server (information processor) 105 serving as the external apparatus from which content groups can be obtained via the Internet 106 or a public radio telecommunication network 107 as shown in FIG. 8.

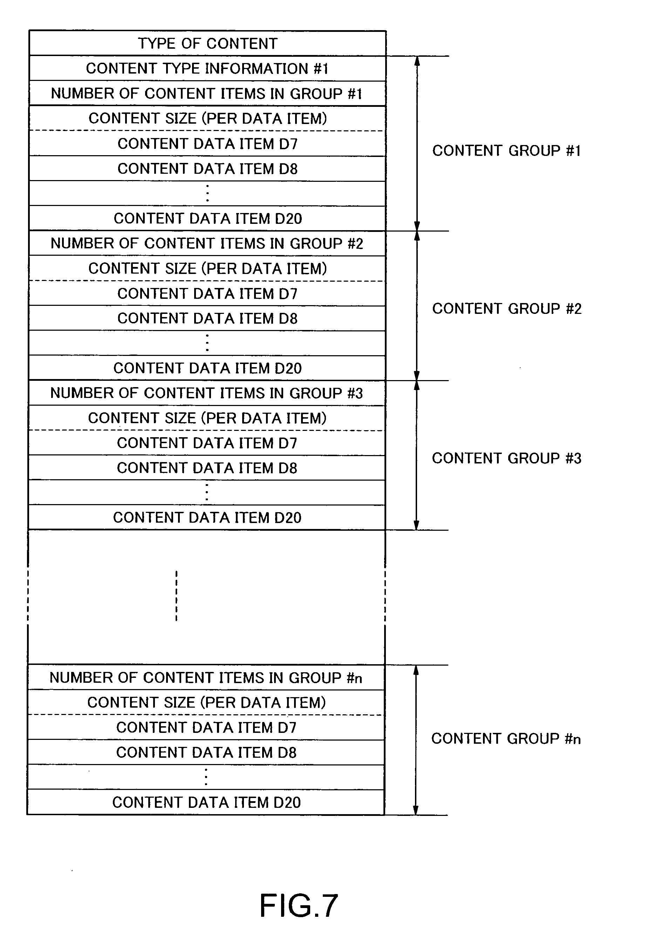

FIG. 8 illustrates a system configuration in a case where the mobile phone 101 according to this embodiment obtains content from the content management server 105. In this embodiment, as shown in FIG. 8, the mobile phone 101 and the content management server 105 are connected via the Internet 106 and the public radio telecommunication network 107 to compose a content setting system. The content management server 105 includes a database 108. that stores several types of content items. In the database 108, sets of content items to be downloaded are stored in correspondence with the panel types (panel IDs). The content groups #1 to #m (content data sets #1 to #m) can be specified by the panel IDs #1 to #m, respectively. Here, a data set specified by a given panel ID corresponds to a content group (one of content groups #1 to #n) described later with reference to FIG. 7.

Referring again to FIG. 5, description of the processing procedure will be resumed. The CPU 11 uses the request information generated in step S6 to perform communications with a Web site (content management server 105) at the set URL (step S7). At this time, the content management server 105 receives the request information from the mobile phone 101, and extracts a content group (one of content data sets #1 to #m) corresponding to the requested panel ID. Then, the content management server 105 transmits the extracted content group to the mobile phone 101 via the Internet 106 and the public radio telecommunication network 107.

FIG. 7 shows an example of a data structure of content groups stored in the content management server 105 according to this embodiment. The content group (one of data sets 1 to m) corresponding to the panel ID contains content data items D7 to D20 corresponding to the processing blocks B7 to B20 described above, respectively. The mobile phone 101 receives the content group shown in FIG. 7 from the content management server 105 (step S8).

Upon completion of obtaining the content group corresponding to the panel ID, the CPU 11 of the control unit 25 registers the content group in a predetermined storage area of the non-volatile memory 27 (step S9) . Then, the processing procedure for the CPU 11 advances to step S10 (content setting processing of FIG. 6).

Next, FIG. 6 will be used to describe details of step S10 (the content setting processing of FIG. 5) . FIG. 6 is a flowchart showing the details of the content setting processing included in the panel detecting/content setting processing of FIG. 5.

The content setting processing is a processing of setting (registering) each content group, which is registered in the memory 27 in step S9 of FIG. 5, so that the CPU 11 can refer to the content group upon execution of each function module (each of the processing blocks B7 to B20). Here, the term "setting (registering)" represents associating a content group stored in the memory 27 with a function module corresponding to the content group. Accordingly, upon execution of a given function module, the CPU 11 can provide a user with display screens and sounds to be outputted, which are contained in the content group, as part of a user interface.

In the content setting processing shown in FIG. 6, the content group to be set contains the content data items B7 to B20. The content data items D7 to D20 correspond to the exemplary data structures of content groups of FIG. 9 in the non-volatile memory 27, and are roughly divided into image data items (content data items D7 to D15) for displaying screens and music (tune) data items (content data items D16 to D20) for outputting sounds.

To be specific, the content data item D7 is an image data item to be displayed as a screen on the display device 24 when a call is made during execution of the voice communication function. The content data item D8 is an image data item to be displayed as a screen on the display device 24 when a call is received during execution of the voice communication function.

The content data item D9 is an image data item to be displayed as a screen on the display device 24 when a call is made during execution of the video communication function. The content data item D10 is an image data item to be displayed as a screen on the display device 24 when a call is received during execution of the video communication function.

The content data item D11 is an image data item to be displayed as a screen on the display device 24 when an e-mail is sent during execution of the e-mail function. The content data item D12 is an image data item to be displayed as a screen on the display device 24 when an e-mail is received during execution of the e-mail function.

The content data item D13 is an image data item to be displayed as a screen on the display device 24 during execution of the schedule management function. The content data item D14 is an image data item to be displayed as a function-selecting menu screen on the display device 24. The content data item D15 is an image data item to be displayed as a standby screen on the display device 24.

The content data item D16 is a music data item to be outputted as a notification sound from the speaker 32 when a call is received during execution of the voice communication function. The content data item D17 is a music data item to be outputted as a notification sound from the speaker 32 when a call is received during execution of the video communication function.

The content data item D18 is a music data item to be outputted as a notification sound from the speaker 32 when e-mail reception is complete during execution of the e-mail function. The content data item D19 is a music data item to be outputted as a notification sound from the speaker 32 during execution of the wake-up alarm notifying function. The content data item D20 is a music data item to be outputted as a notification sound from the speaker 32 during execution of the schedule alarm notifying function.

The CPU 11 executes the content setting processing to set the image data items (content data items D7 to D15) and the music (tune) data items (content data items D16 to D20) that compose the content group to be set, in the order from the processing blocks B7 to B20.

To be specific, the CPU 11 judges whether the content data item to be currently set, which is included in the content data items D7 to D20 composing the content group to be set, is an image data item or a music (tune) data item (step S21). Each content data item is assigned with identification information indicating a data type, which allows determination as to whether the content data item is an image data item or a music data item. The processing procedure for the CPU 11 advances to step S22 if the content data item to be set is an image data item, or to step S32 if the content data item is a music data item.

To be specific, if the content data item to be set is an image data item, the CPU 11 specifies a processing block (one of B7 to B15 ) for setting of the content data item (step S22) according to the identification information assigned to the content data item. Then, the content data item is set in the processing block for the setting which is specified in step S22 (steps S23 to S31). The CPU 11 performs the same processing on each of the content data items D7 to D15 that are image data items contained in the content group to be set.

If the content data item in question is a music data item, the CPU 11 specifies a processing block (one of B16 to B20)- for setting of the content data item (step S32) according to the identification information assigned to the content data item in question. Then, the content data item in question is set (registered) in the processing block for the setting which is specified in step S32 (steps S33 to S37) . The CPU 11 performs the same processing on each of the content data items D16 to D20 that are music data items contained in the content group to be set.

### <Periodic content update>

Description will now be made of an exemplary operation for updating content for a user interface periodically according to this embodiment. For example, consideration will be given to a case where the content is updated every week according to a weekly music chart.

First, among the panel types shown in FIG. 3, for example, the panel #7 is defined as a panel for "weekly update". The panel #7 is assigned with the panel ID "007". Meanwhile, in the database 108 of the content management server 105 shown in FIGs. 7 and 8, the content data set #7 corresponding to the panel ID "007" is updated every week according to a weekly music chart. The update time is preset to, for example, "01:00" of Monday.

In the above-mentioned situation, the CPU 11 of the mobile phone 101 operates in the following manner with regard to the processing block B2 of FIG. 4 and step S5 of FIG. 5. That is, upon judgment of whether or not the content to be set exists in the memory 27, based on a stored history record or log of downloads made from the content management server 105, the CPU 11 compares a current time and a last (latest) download time for the content corresponding to the panel #7. If the current time does not reach "01:00" of Monday after the latest download time, it is judged that the latest content already exists in the memory 27 ("YES" in step S5) . The existence of the latest content eliminates the need to update the content at the current time.

On the other hand, if the current time is ahead of "01: 00" of Monday after the latest download time, the downloaded content is regarded to be more than a week old, which demands that the content be updated into the newest one. Accordingly, the CPU 11 judges that the content to be set does not exist in the memory 27 ("NO" in step S5). As described above, the mobile phone 101 accesses the content management server 105 to download and set the content data set 7 for the user interface. According to the above-mentioned operation, a user only has to exchange the panel #7 attached to the main body of the mobile phone 101 once a week to weekly update the content into the newest one. In addition to the above operation, even with the panel #7 still being in an attached state, an interruption function may be activated to start the processing procedure of FIG. 5 from step S1 when the CPU 11 detects that "01:00" of Monday is reached. This operation eliminates user's action of detaching and attaching again for the panel #7 from and to the mobile phone main body.

Regarding a method of identifying the panel type in this embodiment, the Hall elements 103A to 103C of FIG. 1A can be changed to pressure sensors, and the magnets 104A to 104C of FIG. 1B can be changed to protrusions. In this case, the panel type is identified based on a detection output from the pressure sensors upon attachment of a panel.

According to the embodiment described above, a user can obtain and set or update content, which is to be used for a user interface provided to the user upon execution of a given function of the mobile phone 101, with a simple operation or action.

To be specific, in the mobile phone 101 according to this embodiment, in response to the attachment of the panel 102 to the main body of the mobile phone 101, the CPU 11 within the control unit 25 stores a content data set corresponding to the attached panel 102 into the memory 27 and sets the content data set for various functions that each refer to the corresponding content data item thereof.

Accordingly, the user of the mobile phone 101 can reliably change or update content according to his/her tastes or preferences, the content including a ringtone or a call tone to be used during execution of the voice communication function and display screens to be used when a call is made and a call is received, with such a simple operation or action that the user merely attaches a desired panel 102 to the mobile phone main body.

The operation or action to be performed by the user in this embodiment is as simple as attaching/detaching the panel 102, unlike the conventional complicated operation for selection from a predetermined hierarchical menu and setting of content such as images and melodies on a function basis. Therefore, for example, to use a download service for obtaining so-called ringer melodies and ringer songs, even when the user wishes to update the content (music data) set in the mobile phone 101 into a latest music chart in a short term (e.g., every week), the user can reliably update the currently-set content into the new music data with such a simple operation or action for attachment/detachment of the panel 102.

Further, instead of changing only a content item used for a given single function, this embodiment makes it possible to collectively set (update) a plurality of content items (i.e., a data set specified by a given panel ID) corresponding to a plurality of functions with such a simple operation for attachment/detachment of the panel 102. Therefore, in the case where, for example, content items for respective functions are set in a default state, the user is preferably capable of collectively updating the content items with such a simple operation for attachment/detachment of the panel 102 that suits his/her tastes or preferences, without having to follow a complicated procedure. In this case, each panel 102 may be assigned with an indication (such as "pop", "mood", or "rock") representing a plurality of content items plainly to thereby be recognized easily by the user.

This embodiment is configured such that content available for the mobile phone 101 is obtained from the content management server 105 serving as an external apparatus. Therefore, according to this embodiment, desired content can appropriately be obtained by the user from among various content groups (data sets) stored in the database 108, so various demands of users can be met flexibly. In addition, according to such a system configuration, various and updated contents can be obtained from the content management server 105 as if the mobile phone 101 had a vast user data area, which eliminates the fear that the mobile phone 101 runs out of free storage area of the memory 27. Consequently, preferable effects are produced in that marketability of the mobile phone 101 can be improved while the cost can be lowered.

### <Other embodiments>

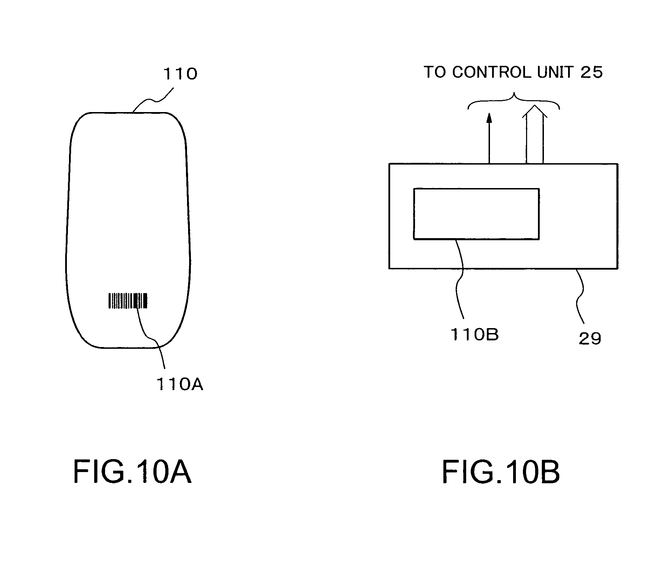

FIGS. 10A and 10B are an external view showing a rear surface of a panel and a block diagram showing a configuration of a panel identifying unit according to another exemplary embodiment of the present invention. In this embodiment, a bar code 110A is provided to a rear surface of a panel 110 in a sticker form, a printed form, or other such form. Meanwhile, the panel identifying unit 29 of a main body of a mobile phone 101 has an optical sensor 110B provided in a position where the bar code 110A of the attached panel 110 can be read. When the panel 110 is attached to the main body of the mobile phone 101, the bar code 110A is read by the optical sensor 110B. As described above, the read information is sent to the control unit 25 and in order to identify the attached panel type. Further, as described above, bar code information may contain information on the URL of the content management server 105.

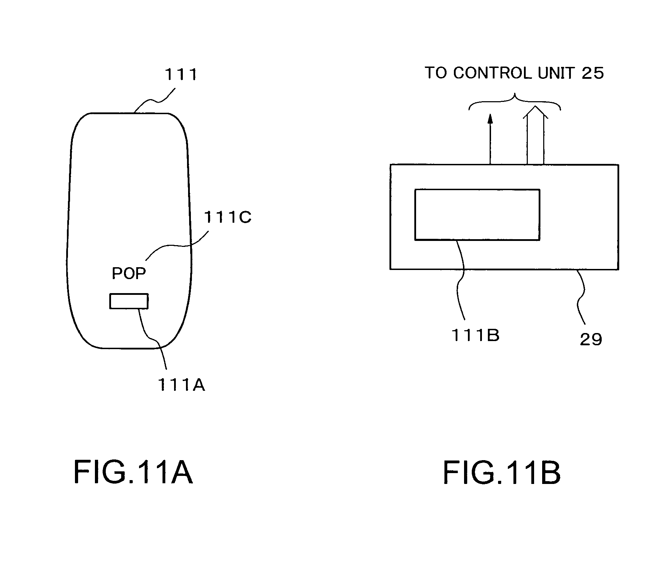

FIGS. 11A and 11B are an external view showing a surface of a panel and a block diagram showing a configuration of a panel identifying unit according to still another exemplary embodiment of the present invention. In this embodiment, an IC chip 111A is provided to a rear surface of a panel 111. Meanwhile, the panel identifying unit 29 of a main body of a mobile phone 101 has an information reader 111B provided in a position where input/output terminals of the IC chip 111A of the attached panel 111 contacts the reader 111B. When the panel 111 is attached to the main body of the mobile phone 101, information on the IC chip 111A is read through the reader 111B. As described above, the read information is sent to the control unit 25 in order to identify the attached panel type. Further, an indication 111C can be made on a rear surface of the panel 111 so that a user can easily recognize the panel type. Note that the IC chip 111A may be embedded in the panel 111 to allow the reader 111B to read information in a non-contact manner. Further, as described above, the IC chip may contain information on the URL of the content management server 105.

### <Modified example of the embodiment>

The above-mentioned embodiments have a system configuration in which the external apparatus from which the content groups can be obtained is set to the content management server 105 on the Internet 106. However, the present invention is not limited to this system configuration but may adopt the external apparatus connected via the public radio telecommunication network 107.

Further, the above-mentioned embodiments are described by taking as an example the processing procedure in which the content data items (D7 to D20) corresponding to the attached panel 102 are collectively set in the processing blocks B7 to B20, respectively, in response to the attachment of the panel 102. However, the present invention is not limited to this processing procedure. For example, the mobile phone 101 may be provided with a user interface that makes it possible to preset which function (processing block) a content data item to be changed (updated) is set in, or may be provided with a user interface that allows the user to set, in response to the attachment of the panel 102, which function (processing block) a content data item to be changed (updated) is set in.

Further, the above-mentioned embodiments are described with the processing procedure in which the content data items (D7 to D20) are automatically set in order in the content setting processing of FIG. 6. However, the present invention is not limited to this processing procedure. For example, the mobile phone 101 may be provided with a user interface allowing the user to select whether or not to set a subsequent content item upon completion of setting a given content item.

Further, a configuration in which content items of the same type (content items identified by the same content ID) are obtained periodically or aperiodically is not limited to the operation for attaching/detaching the panel 102 performed by the user. For example, a system configuration may be adopted,
in which the content management server 105 informs the mobile phone 101 that updated content is available, while the informed mobile phone 101 updates content therein only when the user wishes. Alternatively, a function of accessing the content management server 105 every predetermined period may be added to the control processings executed by the CPU 11 of the mobile phone 101.

The above-mentioned embodiments are described by applying the present invention to the mobile phone 101. However, the present invention is not limited to the application to a mobile phone. For example, the present invention can also be applied to a mobile terminal such as a personal digital assistant (PDA) or a so-called electronic organizer with a panel attachable to a casing of the mobile terminal.

Further, the present invention which has been described by taking the embodiments as examples is achieved by supplying the mobile phone 101 with a computer program capable of implementing the functions shown in the flowcharts of FIGs. 4 to 6 referred to upon description of the mobile phone 101, and by loading the computer program onto the CPU 11 of the mobile phone 101 to execute the computer program. The computer program supplied to the mobile phone 101 may be stored in a readable/writeable memory or a storage device such as a hard disk drive.

Further, in this case, currently-general procedures can be adopted as a method of supplying a computer program into a device such as a method of installing the computer program by using an appropriate jig, tool or apparatus upon production before shipping or upon maintenance after shipping, or a method of downloading the computer program from an outside via communication lines such as the Internet. In this case, the present invention includes codes composing the computer program and a storage medium therefor.

While this invention has been described in connection with certain preferred embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

Further, it is the inventor's intention to retain all equivalents of the claimed invention even if the claims are amended during prosecution.

## Claims

1. A mobile terminal comprising:
a panel detachably attached to a body of the mobile terminal;
a user interface provided to a user upon execution of a function of the mobile terminal;
a panel identifying unit for identifying the type of panel attached to the mobile terminal; and
a controller for obtaining content corresponding to the type of panel identified by the panel identifying unit from an external apparatus if the content does not exist in the mobile terminal, and setting the obtained content for the user interface in a usable state.

2. A mobile terminal according to claim 1, wherein the content comprises image data to be displayed on a screen as part of the user interface upon execution of the function.

3. A mobile terminal according to claim 2, wherein the image data comprises image data to be displayed on a display device upon execution of the function including at least one of a communication function, an e-mail sending/receiving function, and a time informing alarm function.

4. A mobile terminal according to claim 1, wherein the content comprises music data to be audibly outputted as part of the user interface upon execution of the function.

5. A mobile terminal according to claim 4, wherein the music data comprises music data to be audibly outputted upon execution of the function including at least one of a communication function, an e-mail sending/receiving function, and a time informing alarm function.

6. A mobile terminal according to claim 1, wherein the content comprises several types of content items corresponding respectively to several types of functions executed by the mobile terminal.

7. A mobile terminal according to claim 6, wherein the controller collectively sets the several types of content items.

8. A mobile terminal according to claim 7, wherein the user can select whether or not to set the respective content items when the controller collectively sets the several types of content items.

9. A mobile terminal according to claim 1, wherein the external apparatus comprises an information processor that can be specified as a Web site on the Internet.

10. A mobile terminal according to claim 1, wherein:
the panel includes at least one magnet in a predetermined position; and
the panel identifying unit includes at least one Hall element for detecting presence/absence of the magnet, and identifies the type of the attached panel based on a combination of the presence/absence and the position of the magnet.

11. A mobile terminal according to claim 1, wherein:
the panel includes a bar code in a predetermined position; and
the panel identifying unit includes an optical sensor for reading the bar code, and identifies the type of the attached panel based on a reading from the optical sensor.

12. A mobile terminal according to claim 1, wherein:
the panel includes an IC chip in a predetermined position; and
the panel identifying unit includes an information reader for reading information within the IC chip, and identifies the type of the attached panel based on a reading from the information reader.

13. A mobile terminal according to claim 1, further comprising a memory,
wherein the controller reads the content corresponding to the type of panel identified by the panel identifying unit from the memory if the content exists in the memory of the mobile terminal, and sets the read content for the user interface in the usable state.

14. A mobile terminal having a panel detachably attached to a body of the mobile terminal and a user interface provided to a user upon execution of a function of the mobile terminal, the mobile terminal further comprising:
panel identifying means for identifying the type of panel attached to the mobile terminal; and
a control means for obtaining content corresponding to the type of panel identified by the panel identifying means from an external apparatus if the content does not exist in the mobile terminal, and setting the obtained content for the user interface in a usable state.

15. A content setting method for a mobile terminal, comprising:
an identifying step of, when a panel detachably attached to a body of the mobile terminal is attached, identifying a type of the attached panel; and
a content obtaining step of obtaining content corresponding to the type of panel identified in the identifying step from an external apparatus; and
a setting step of setting the obtained content for a user interface, which is provided to the user upon execution of a function of the mobile terminal, in a usable state.

16. A content setting method for a mobile terminal according to claim 15, wherein the content comprises image data to be displayed on a screen as part of the user interface upon execution of the function.

17. A content setting method for a mobile terminal according to claim 15, wherein the content comprises music data to be audibly outputted as part of the user interface upon execution of the function.

18. A content setting method for a mobile terminal according to claim 15, wherein the content comprises plural types
of content items corresponding respectively to plural types of functions executed by the mobile terminal.

19. A content setting method for a mobile terminal according to claim 18, wherein the setting step includes collectively setting the plural types of content items.

20. A content setting system, in which content to be used for a user interface, which is provided to a user upon execution of a function of a mobile terminal, is set in the mobile terminal
in which a panel is detachably attached to a body of the mobile terminal, the content setting system comprising:
the mobile terminal comprising:
a panel identifying unit for identifying the type of panel attached to the mobile terminal; and
a controller for requesting the content corresponding to the attached panel from an external apparatus based on information indicating the type of panel identified by the panel identifying unit, and when the content is obtained, setting the obtained content for the user interface in a usable state; and
the external apparatus for, when information indicating the type of the attached panel is obtained from the mobile terminal, extracting a data set corresponding to the information from a database storing a plurality of content data sets, and providing the extracted data set to the mobile terminal.

21. A content setting system, in which content to be used for a user interface, which is provided to a user upon execution of a function of a mobile terminal, is set in the mobile terminal in which a panel is detachably attached to a body of the mobile terminal, the content setting system comprising:
the mobile terminal comprising:
a memory for storing the content;
a panel identifying unit for identifying the type of panel attached to the mobile terminal; and
a controller for, based on information indicating the type of panel identified by the panel identifying unit:
reading the content corresponding to the type of the panel from the memory if the corresponding content exists in the memory, and setting the read content for the user interface in a usable state; and
requesting the content corresponding to the attached panel from an external apparatus if the corresponding content does not exist in the memory, and setting the content obtained from the external apparatus for the user interface in the usable state; and
the external apparatus for, when information indicating the type of panel is obtained from the mobile terminal, extracting a data set corresponding to the information from a database storing a plurality of content data sets, and providing the extracted data set to the mobile terminal.

22. A content setting system according to claim 21,
wherein:
in the external apparatus, at least part of the plurality of data sets are periodically updated; and
in the mobile terminal, when judging that the content corresponding to the attached panel in the memory is not the latest periodic updated content at the external apparatus even if the content exists in the memory, the controller requests the updated content from the external apparatus, obtains the content, and sets the obtained content for the user interface.

23. A content setting system, in which content to be used for a user interface, which is provided to a user upon execution of a function of a mobile terminal, is set in the mobile terminal
in which a panel is detachably attached to a body of the mobile terminal, the content setting system comprising:
the mobile terminal comprising:
panel identifying means for identifying the type of panel attached to the mobile terminal; and
control means for requesting content corresponding to the attached panel from an external content providing means based on information indicating the type of panel identified by the panel identifying means, and when the content is obtained, setting the obtained content for the user interface in a usable state; and
the external content providing means for, when information indicating the type of attached panel is obtained from the mobile terminal, extracting a data set corresponding to the information from database means storing a plurality of content data sets, and providing the extracted data set to the mobile terminal.

24. A content setting system, in which content to be used for a user interface, which is provided to a user upon execution of a function of a mobile terminal, is set in the mobile terminal in which a panel is detachably attached to a body of the mobile terminal, the content setting system comprising:
the mobile terminal comprising:
memory means for storing the content;
panel identifying means for identifying the type of panel attached to the mobile terminal; and
control means for, based on information indicating the type of panel identified by the panel identifying means:
reading the content corresponding to the type of panel from the memory means if the, corresponding content exists in the memory means, and setting the read content for the user interface in a usable state; and
requesting the content corresponding to the attached panel from an external content providing means if the corresponding content does not exist in the memory means, and setting the content obtained from the external apparatus for the user interface in the usable state; and
the external content providing means for, when information indicating the type of the panel is obtained from the mobile terminal, extracting a data set corresponding to the information from database means storing a plurality of content data sets, and providing the extracted data set to the mobile terminal.

25. A computer program for controlling an operation of a mobile terminal in which a panel is detachably attached to a body of the mobile terminal, the computer program causing a computer to implement:
an identifying function of identifying the type of panel attached to the mobile terminal;
a content obtaining function of obtaining content corresponding to the type of panel identified in the identifying function from an external apparatus if the content does not exist in the mobile terminal; and
a control function of setting the obtained content for the user interface, which is provided to the user by the mobile terminal upon execution of a function, in a usable state.
